# EUROPEAN PATENT APPLICATION

(11) **EP 3 396 437 A1**
(43) Date of publication of application: **31.10.2018**
(21) Application number: 16908374.8
(22) Date of filing: 14.07.2016
(51) Int. Cl.: G02C 5/14, G02C 5/02

(54) **EYE GLASSES PROCESSING METHOD OF METAL SHEET WRAPPING ACETATE SHEET SURFACE**

(71) Applicant: Wang, Daomin, Nanlian Shequ Shenzhen Guangdong 518052 (CN)
(72) Inventor: Wang, Daomin, Nanlian Shequ Shenzhen Guangdong 518052 (CN)
(74) Representative: Spittle, Mark Charles
(86) International application number: PCT/CN2016/000385
(87) International publication number: WO 2018/010041

(57) **Abstract**

A method for processing a pair of spectacles having a metal sheet wrapping the surface of an acetate sheet comprises the following steps: step 1, cutting a 4.0 acetate sheet; step 2, softening the cut acetate sheet through baking, and tapping a steel needle into the acetate sheet; step 3, cutting out grooves in the two sides of the acetate sheet, and clamping metal fittings on the acetate sheet; step 4, mounting an upper die and a lower die on a 15-ton hydraulic press; step 5, clamping a metal material in the grooves formed in the acetate sheet, sleeving the metal material and the acetate sheet in a middle pressing die, and heating the metal material and the acetate sheet sleeved by the middle pressing die in an oven; step 6, baking the acetate sheet in a sealed oven; step 7, after the acetate sheet is completely softened, sleeving the acetate sheet and the middle pressing die in the lower die of the hydraulic press, and directly pressing the acetate sheet through the hydraulic press with an adjusted pressure of 1 ton; step 8, taking out the acetate sheet, and grinding an excess acetate sheet material and metal material on the surface of the acetate sheet to be flush through a waterproof abrasive paper machine; and step 9, after pressing the metal material in the acetate sheet, performing subsequent spectacle processing procedures according to a traditional method so as to fabricate a finished spectacle product.

## Description

### FIELD OF THE INVENTION

The present invention belongs to the technical field of spectacle fabrication, and relates to a method for processing a pair of spectacles having a metal sheet wrapping the surface of an acetate sheet.

### BACKGROUND OF THE INVENTION

Currently, in a traditional spectacle fabrication process, a metal material can only be fixed and locked on the surface of an acetate sheet through screws, rather than directly wrapping the surface of the acetate sheet. For example, Chinese Patent No. CN2684224Y discloses a pair of standard spectacles consisting of a spectacle frame and spectacle lenses. Screws are arranged on the spectacle frame; metal sheets with grooves are arranged on upper edges of outer frames of the spectacle lenses, are capable of sliding horizontally along the screws, and are fixed on the screws through nuts. However, the mounting manner of the metal sheets through this screwed connection manner is complicated. Moreover, the metal sheets are likely to fall off after a long period of time. In addition, the inner surface and the outer surface of the acetate sheet cannot be wrapped with metal fittings in the prior art.

### SUMMARY OF THE INVENTION

For the above defects in the prior art, the present invention provides a method for processing a pair of spectacles having a metal sheet wrapping the surface of an acetate sheet.

The above object of the present invention is achieved through the following technical solution.

A method for processing a pair of spectacles having a metal sheet wrapping the surface of an acetate sheet comprises the following steps: step 1, cutting a 4.0 acetate sheet according to a conventional method; step 2, softening the cut acetate sheet through baking, and tapping a steel needle into the acetate sheet through a billet machine; step 3, cutting out grooves in the two sides of the acetate sheet having the steel needle, and clamping metal fittings on the acetate sheet; step 4, mounting an upper die and a lower die on a 15-ton hydraulic press; step 5, clamping a metal material in the grooves formed in the acetate sheet, sleeving the metal material and the acetate sheet in a middle pressing die, and heating the metal material and the acetate sheet sleeved by the middle pressing die in an oven; step 6, baking the acetate sheet in a sealed oven; step 7, after the acetate sheet is completely softened, directly sleeving the softened acetate sheet and the middle pressing die in the lower die of the hydraulic press, and directly pressing the acetate sheet through the hydraulic press with an adjusted pressure of 1 ton; step 8, taking out the hydraulically pressed acetate sheet, and grinding an excess acetate sheet material and metal material on the surface of the acetate sheet to be flush through a waterproof abrasive paper machine so as to prevent the acetate sheet material around the metal material from being melted by heat generated during grinding the metal material; and step 9, after pressing the metal material in the acetate sheet, performing subsequent spectacle processing procedures according to a traditional method so as to fabricate a finished spectacle product.

Further, in step 2, the cut acetate sheet is softened by being heated to 200 °C.

Further, in step 3, the depth of the groove is 0.6 mm.

Further, in step 6, the heating temperature of the sealed oven is adjusted to 250 °C, and the acetate sheet is heated in the oven for 1 minute.

In the method for processing the pair of spectacles having the metal sheet wrapping the surface of the acetate sheet, provided by the present invention, technical principles of softening the acetate sheet through heating and strengthening through hydraulic pressing are adopted, so that no joint mark can be found on the surface of the acetate sheet. In addition, complicated pressing procedures can be reduced, and a production cost of an enterprise is lowered.

### BRIEF DESCRIPTION OF THE DRAWINGS

The drawings described herein are used to provide a further understanding of the present invention, and constitute a part of the present invention. The exemplary embodiments of the present invention and descriptions thereof are used to explain the present invention, and do not constitute improper limitations of the present invention. In the drawings:
Fig. 1 is schematically structural views of metal fittings on the left and right sides, respectively;
Fig. 2 is a schematically structural view of a left part of a lower die;
Fig. 3 is a schematically structural view of a right part of the lower die;
Fig. 4 is a specific pressure view of a grinding tool of an upper die;
Fig. 5 is a specific pressure view of a grinding tool of the lower die;
Fig. 6 is a specific pressure view of a grinding tool of a middle pressing die; and
Fig. 7 is a schematically structural view of a finished spectacle product.

### DETAILED DESCRIPTION OF THE EMBODIMENTS

To make the objects, technical solutions and advantages of embodiments of the present invention clearer, the technical solutions of the embodiments of the present invention will be described clearly and completely below in combination with the accompanying drawings of the embodiments of the present invention. Obviously, the described embodiments are only a part of the embodiments of the present invention, rather than all the embodiments thereof. All other embodiments obtained by persons skilled in the art based on the described embodiments of the present invention without creative efforts shall fall within the protection scope of the present invention.

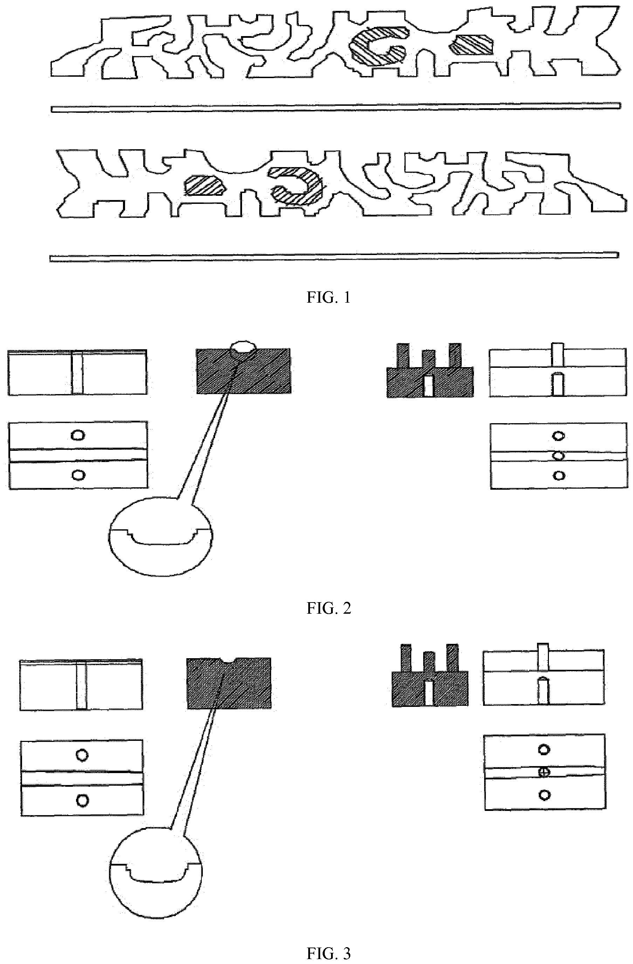

As shown in Figs. 1-7, in a preferred embodiment, a method for processing a pair of spectacles having a metal sheet wrapping the surface of an acetate sheet particularly comprises the following steps.

In step 1, a 4.0 acetate sheet is cut according to a conventional method.

In step 2, the cut acetate sheet is softened by being heated to 200 °C; and a steel needle is tapped into the softened acetate sheet through a billet machine.

In step 3, grooves with the depth of 0.6 mm are cut out in the two sides of the acetate sheet having the steel needle; and metal fittings are clamped on the acetate sheet. Fig.1 is schematically structural views of the metal fittings on the left and right sides, respectively.

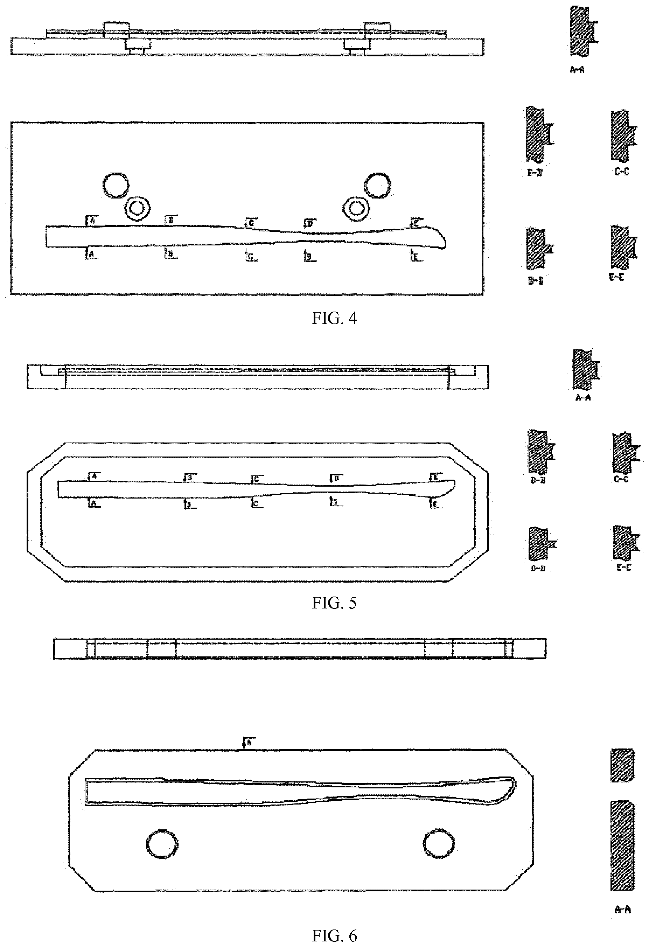

In step 4, an upper die and a lower die are mounted on a 15-ton hydraulic press. Figs. 2 and 3 are schematically structural view of a left part and right part of a lower die, respectively. Fig. 4 is a specific pressure view of a grinding tool of an upper die. Fig. 5 is a specific pressure view of a grinding tool of the lower die.

In step 5, a metal material is clamped in the grooves formed in the acetate sheet; the metal material and the acetate sheet are sleeved in a middle pressing die whose schematically structural view is shown in Fig. 6; and the metal material and the acetate sheet sleeved by the middle pressing die are heated in an oven.

In step 6, the heating temperature of a sealed oven is adjusted to 250 °C; and the acetate sheet is heated in the oven for 1 minute.

In step 7, after the acetate sheet is completely softened, the softened acetate sheet and the middle pressing die are directly sleeved in the lower die of the hydraulic press, the lower die being shown in Fig. 5; and the acetate sheet is directly pressed through the hydraulic press with an adjusted pressure of 1 ton.

In step 8, the hydraulically pressed acetate sheet is taken out; and an excess acetate sheet material and metal material on the surface of the acetate sheet are ground to be flush through a waterproof abrasive paper machine so as to prevent the acetate sheet material around the metal material from being melted by heat generated during grinding the metal material.

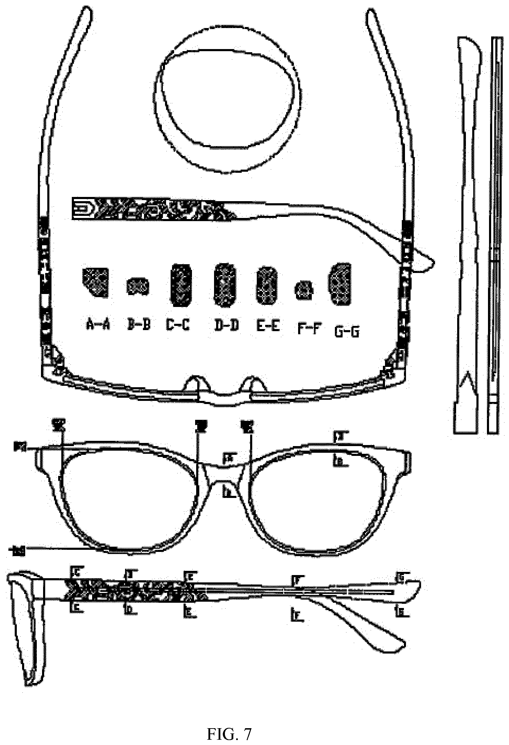

In step 9, after pressing the metal material in the acetate sheet, subsequent spectacle processing procedures are performed according to a traditional method so as to fabricate a finished spectacle product as shown in Fig. 7.

In the method for processing the pair of spectacles having the metal sheet wrapping the surface of the acetate sheet, provided by the present invention, technical principles of softening the acetate sheet through heating and strengthening through hydraulic pressing are adopted, so that the molecular structure of the acetate sheet is expanded through heating; and then a high pressure is applied to integrate the acetate sheet molecular material and the metal material. Thus, no joint mark can be found on the surface of the acetate sheet after completion. Through this technology, any metal material can be controllably pressed at a predetermined position on the surface of an acetate sheet raw material. Compared with the prior art, a product fabricated through this technology is beautiful and flawless. In addition, complicated pressing procedures can be reduced, and a production cost of an enterprise is lowered.

Although the present invention has been particularly shown and described with reference to the exemplary embodiments thereof, it will be understood by those skilled in the art that various changes in form and details may be made therein and various embodiments may be combined at will without departing from the spirit and scope of the present invention as defined by the appended claims.

## Claims

1. A method for processing a pair of spectacles having a metal sheet wrapping the surface of an acetate sheet, the method comprising the following steps:
step 1, cutting a 4.0 acetate sheet according to a conventional method;
step 2, softening the cut acetate sheet through baking, and tapping a steel needle into the acetate sheet through a billet machine;
step 3, cutting out grooves in the two sides of the acetate sheet having the steel needle, and clamping metal fittings on the acetate sheet;
step 4, mounting an upper die and a lower die on a 15-ton hydraulic press;
step 5, clamping a metal material in the grooves formed in the acetate sheet, sleeving the metal material and the acetate sheet in a middle pressing die, and heating the metal material and the acetate sheet sleeved by the middle pressing die in an oven;
step 6, baking the acetate sheet in a sealed oven;
step 7, after the acetate sheet is completely softened, directly sleeving the softened acetate sheet and the middle pressing die in the lower die of the hydraulic press, and directly pressing the acetate sheet through the hydraulic press with an adjusted pressure of 1 ton;
step 8, taking out the hydraulically pressed acetate sheet, and grinding an excess acetate sheet material and metal material on the surface of the acetate sheet to be flush through a waterproof abrasive paper machine so as to prevent the acetate sheet material around the metal material from being melted by heat generated during grinding the metal material; and
step 9, after pressing the metal material in the acetate sheet, performing subsequent spectacle processing procedures according to a traditional method so as to fabricate a finished spectacle product.

2. The method for processing the pair of spectacles having the metal sheet wrapping the surface of the acetate sheet of claim 1, wherein in step 2, the cut acetate sheet is softened by being heated to 200 °C.

3. The method for processing the pair of spectacles having the metal sheet wrapping the surface of the acetate sheet of claim 1, wherein in step 3, the depth of the groove is 0.6 mm.

4. The method for processing the pair of spectacles having the metal sheet wrapping the surface of the acetate sheet of claim 1, wherein in step 6, the heating temperature of the sealed oven is adjusted to 250 °C, and the acetate sheet is heated in the oven for 1 minute.
